(19)

Europäisches
Patentamt

European
Patent Office

Office européen
des brevets

(11)  **EP 2 493 329 B1**

(12)  **EUROPEAN PATENT SPECIFICATION**

(45) Date of publication and mention
of the grant of the patent:
**31.07.2013 Bulletin 2013/31**

(21) Application number: **10757104.4**

(22) Date of filing: **23.09.2010**

(51) Int Cl.:
*A23G 9/16* (2006.01)        *A23G 9/48* (2006.01)
*A23G 9/44* (2006.01)

(86) International application number:
**PCT/EP2010/064085**

(87) International publication number:
**WO 2011/051061 (05.05.2011 Gazette 2011/18)**

(54) **Process for producing frozen confectionery products**

Verfahren zur Herstellung gefrorener Süßwarenprodukte

Processus de production de produits de confiserie congelés

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.10.2009 EP 09174451**

(43) Date of publication of application:
**05.09.2012 Bulletin 2012/36**

(73) Proprietors:
• **Unilever PLC, A Company Registered in England
and
Wales under Company no. 41424
London, Greater London EC4Y 0DY (GB)**
Designated Contracting States:
**CY GB IE MT**
• **Unilever NV
3013 AL Rotterdam (NL)**
Designated Contracting States:
**AL AT BE BG CH CZ DE DK EE ES FI FR GR HR
HU IS IT LI LT LU LV MC MK NL NO PL PT RO SE
SI SK SM TR**

(72) Inventors:
• **ALDRED, Alexander
Bedford
Bedfordshire MK44 1LQ (GB)**
• **CHAMBERLAIN, Dorothy, Margaret
Bedford
Bedfordshire MK44 1LQ (GB)**

(74) Representative: **Hugot, Alain
Unilever Patent Group
Colworth House
Sharnbrook, Bedford, MK44 1LQ (GB)**

(56) References cited:
| | |
|---|---|
| EP-A1- 1 943 905 | EP-A1- 2 108 265 |
| WO-A1-2005/058058 | GB-A- 1 369 199 |
| GB-A- 2 008 382 | US-A- 3 256 710 |
| US-A- 4 569 209 | US-A- 5 738 889 |
| US-A1- 2008 131 575 | US-A1- 2008 171 113 |

**Description**

**Technical Field of the Invention**

The present invention relates to a process for producing frozen confectionery products which contain inclusions, in particular it relates to inclusions which have a low solids content.

**Background to the Invention**

It is well-known to incorporate inclusions, such as pieces of chocolate, fruit, nut, biscuit, toffee etc. into frozen confections such as ice cream. Inclusions provide consumer appeal because of the taste and texture contrast they provide. However, inclusions such as chocolate and toffee pieces typically contain high amounts of sugar and / or fat. Fruit pieces are normally infused with large amounts of sugar before they can be used as inclusions in frozen confections as otherwise they would be too hard and not have the desired (e.g. chewy) texture. Consumers are increasingly looking for frozen confections that are healthier. However, reducing the amount of sugar / fat has an undesirable effect on the texture of the inclusions, for example fruit pieces become very hard and icy.

GB 2 008 382 and GB 1 369 199 disclose frozen confections which contain fruit-flavoured gel beadlets. The gel beadlets have a texture resembling that of natural fruit. The beadlets must contain sufficient freezing point depressants (typically sugars) so that they are in a compressible gel state and are biteable at the temperatures of frozen confections. A particular process and particular gel-forming stabilisers are required in order to produce them: droplets of a solution of the fruit material containing sodium alginate are dropped into a solution containing calcium ions. The calcium ions combine with the alginate to form the gel.

From EP-19 43 905 a frozen confection is known, which comprises frozen inclusions. Therefore there remains a need for frozen confections with inclusions which contain reduced amounts of sugar and / or fat but which have textures similar to those of conventional inclusions and which can be produced in a simple manner.

**Brief Description of the Invention**

We have now devised a simple process for producing inclusions with low sugar / fat contents in the form of frozen particles. The process does not require a gel to be formed before freezing. The frozen particle inclusions have the desired chewy texture, provided that they contain a minimum amount of stabiliser. Accordingly, in a first aspect, the present invention provides a process for producing a frozen confectionery product comprising a frozen composition which contains inclusions in the form of frozen particles, the process comprising:

(i) preparing a mix of ingredients having a total solids content of from 5 to 25% and containing from 0.2 to 2.0 wt% of one or more stabilisers;
(ii) optionally pasteurising and / or homogenising and / or ageing the mix;
(iii) freezing the mix in a fragmented ice maker comprising a refrigerated barrel and a screw auger to form the frozen particles; and
(iv) dosing the frozen particles into the frozen composition.

Preferably the stabilisers do not form a gel prior to freezing.

Preferably the size of the frozen particles is mechanically reduced before, during or after step (iv).

Preferably the stabiliser comprises locust bean gum, guar gum, tara gum, iota carrageenan, low methoxy pectin, alginate and mixtures thereof. More preferably the stabiliser consists essentially of locust bean gum.

Preferably the frozen particles comprise from 0.3 to 1.0 wt% of stabiliser.

Preferably the frozen particles have a total solids content of from 10 to 20 wt%.

Preferably the frozen particles in the frozen composition are from 1 to 20mm in diameter, more preferably 2 to 10mm.

Preferably the amount of frozen particles is from 2 to 30% by weight of the frozen confectionery product.

Preferably the frozen particles are chocolate-flavoured.

Preferably the frozen composition is ice cream, water ice, milk ice, sorbet, sherbet or frozen yoghurt.

Detailed Description of the Invention

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 6th Edition, R. T.

Marshall, H. D. Goff and R. W. Hartel (2003), Kluwer Academic/Plenum Publishers. All percentages, unless otherwise stated, refer to the percentage by weight, with the exception of percentages cited in relation to the overrun.

The term "frozen composition" means a sweet-tasting fabricated foodstuff in the frozen state (i.e. under conditions wherein the temperature of the foodstuff is less than 0°C, and preferably under conditions wherein the foodstuff comprises significant amounts of ice). Frozen compositions include ice cream, water ice, milk ice, sorbet, sherbet, frozen yoghurt and the like. Frozen compositions may be aerated or unaerated. Aerated frozen compositions have an overrun of more than 20%, preferably more than 50%, more preferably more than 75%. Preferably the frozen composition has an overrun of less than 200%, more preferably less than 150%, most preferably less than 120%. Overrun is defined by the equation below and is measured at atmospheric pressure

$$\text{overrun \%} = \frac{\text{density of mix - density of frozen confection}}{\text{density of frozen confection}} \times 100$$

The frozen composition may be manufactured by any suitable process, typically by preparing a mix of ingredients; then pasteurising and optionally homogenising the mix; and then freezing and optionally aerating the mix to produce the frozen composition.

The frozen particles mostly consist of ice and have a total solids content of at most 25%, preferably at most 20%, more preferably at most 19% total solids. The lower the total solids content (and hence sugar content), the more attractive is the product to health conscious consumers. However, the frozen particles have a total solids content of at least 5%, preferably at least 10%, more preferably at least 15%, since if the total solids content is too low, the texture of the frozen particle becomes hard and icy. The total solids content of a frozen particle is its dry weight, i.e. the sum of the weights of all the ingredients other than water, expressed as a percentage of the total weight. It is measured by the oven drying method as described in Ice Cream, 6th Edition, Marshall et al. (2003) p296.

The frozen particles contain at least 0.2 wt%, preferably at least 0.25wt%, more preferably at least 0.3 wt% of a stabiliser; and at most 2%, preferably at most 1%, more preferably at most 0.75% The presence of stabiliser at these relatively high levels results in a soft and chewy texture.

Suitable stabilisers include plant extrudates such as gum arabic, gum ghatti, gum karaya, gum tragacanth; seed gums such as locust bean gum, guar gum, tara gum, psyyllium seed gum, quince seed gum or tamarind seed gum; konjac mannan; seaweed extracts such as alginates, carrageenans (e.g. iota carrageenan and kappa carrageenan) or furcelleran; pectins such as low methoxyl or high methoxyl-type pectins; cellulose derivatives such as sodium carboxymethyl cellulose, microcrystalline cellulose, methyl and methylethyl celluloses, or hydroxylpropyl and hydroxypropylmethyl celluloses; modified starches; and microbial gums such as dextran, xanthan or $\beta$-1,3-glucan. Mixtures of stabilisers may be used. It is believed that the presence of a relatively high amount of stabilisers in the frozen particles modifies their texture, resulting in chewy inclusions. Preferably the stabiliser comprises locust bean gum, guar gum, tara gum, iota carrageenan, low methoxy pectin or alginate. Most preferably the stabiliser is locust bean gum. We have found that locust bean gum gives particularly chewy inclusions. Locust bean gum has the ability to cryogel, i.e. to form a gel during freezing. Without wishing to be limited by theory, it is believed that the gel forms within the frozen particles and thereby modifies their texture. This gives even better results than stabilisers which are thickeners, but do not gel (such as guar gum). It also gives better results than stabilisers which gel before freezing (e.g. alginate which gels in the presence of calcium ions), since such gels can be damaged or disrupted during freezing.

In addition to the stabiliser, the other solids present in the frozen particles are typically mostly sugars. Optionally, ingredients such as proteins (e.g. from milk), flavours (e.g. cocoa powder for chocolate-flavoured inclusions, fruit material such as juice or puree), colours, fat, emulsifiers etc. may be included. The sugars provide most of the freezing point depression, and hence determine the ice content of the frozen particle, which in turn affects the texture. When the solids content is essentially made up of the sugars, with only small amounts of other ingredients, solids contents at the lower end of the range (e.g. about 5 to 10%) are preferably used. When the non-sugar ingredients make up a larger proportion of the total solids, it is preferred that the frozen particles have a solids content toward the higher end of the range, e.g. at least about 15%, since the non-sugar ingredients have little effect on the ice content and the frozen particles could otherwise be quite icy.

In a preferred embodiment, the frozen particles are chocolate flavoured, so that they contain at least 1 wt%, preferably at least 2 wt% cocoa solids, e.g. in the form of cocoa powder.

The frozen particles are manufactured by a simple process which does not require that a gel is formed before freezing. First, a mix is prepared by blending the ingredients (sugars, stabilisers, milk protein, fats, colours and flavours etc.) into hot water (generally > 60°C). The mix may then be homogenised, pasteurised (> 80°C) and then cooled to 10°C or below and held for a period (typically > 4hours) in an ageing vessel. Heat sensitive ingredients, such as fruit, flavours or colours, can be added directly into the cooled mix at this point. The frozen particles are produced in a continuous process by using a fragmented ice maker (such as the Ziegra Ice machine ZNE 2000, ZIEGRA-Eismaschinen GmbH, Isernhagen, Germany). A fragmented ice maker is described in US 4,569,209. The mix is pumped into the base of the ice machine and drawn through its barrel by a rotating screw auger. The barrel is cooled which freezes the mix into an ice slurry as it rises through the barrel. By the time the slurry reaches the top of the barrel, it has formed solid pieces, typically ~ 1 cm in diameter, which exit the barrel through its open upper end. The temperature of these pieces is generally between -0.5 and -3°C depending on the composition of the mix. The balance of the cooling and rotational speed is important. If there is not enough cooling (e.g. the barrel temperature is too high, or the rotational speed is too fast so that the mix has a short residence time inside the barrel), slushy, soft frozen pieces are formed, which are difficult to handle in subsequent processing. Alternatively if there is too much cooling (barrel temperature too low and / or rotation rate too slow, hence residence time too high) the mix in the barrel will freeze completely, so that it cannot come out of the open end, and mechanical damage may be caused to the machinery. The ice maker operates well with mixes that have relatively low solids contents (i.e. less than 25%), such as single strength fruit puree, fruit juice or milk, and also water ice or milk ice mixes.

The frozen particles may be combined with the frozen composition by means of an inclusion feeder which doses the frozen particles into the frozen composition e.g. with a rotating paddle element. The frozen composition should be sufficiently soft / flowable to blend in the frozen particles, i.e. it will typically be partially frozen at a temperature of -2°C or below, typically around -5°C. The frozen particles are preferably at a temperature of about -0.5°C or below when combined with the frozen composition. Preferably the frozen particles are at a temperature of no lower than -10°C, so that they do not cool the frozen composition down so much that it becomes stiff and difficult to process further, e.g. to extrude. After dosing, the frozen particles are distributed into the frozen composition, i.e. they are inclusions.

Preferably the frozen particles in the frozen confectionery product are at least 1 mm in diameter, more preferably at least 2mm. Preferably the frozen particles are less than 20mm in diameter, more preferably less than 10mm, since inclusions of this size are generally preferred by consumers. It is possible to produce frozen particles which are larger than the required size of inclusion, and then subsequently reduce their size, e.g. by using a mechanical crushing device to achieve the desired size of inclusions. A size reduction step provides a convenient method of ensuring that the inclusions have a size within the preferred ranges. This size reduction step can be made before combining the frozen particles with the other ingredients of the frozen confection, or alternatively afterwards by using an in-line crushing devices, e.g. by passing the mixture through a constriction of the required size. A suitable size-reduction device (a crushing pump) which allows for in-line reduction of particle size is described in WO 2006 / 007922.

The amount of frozen particles is preferably at least 2% by weight of the combined amount of frozen particles and frozen composition, more preferably at least 5 wt%. Preferably the amount of frozen particles is less than 30 wt%, more preferably less than 20 wt%.

After dosing the frozen particles into the frozen composition, the product may be further frozen (hardened), subjected to further process steps (e.g. dipping / coating), packaged and stored. The frozen confectionery products are typically single serving products e.g. 50-200mL, preferably 70-150mL in size. They may consist of a receptacle, which may be edible (e.g. a wafer or chocolate cone) or inedible (e.g. a tub). Alternatively, they may be stick products, for example produced by extruding frozen composition containing frozen particles into moulds.

Examples

The invention will now be further described with reference to the following examples, which are illustrative only and non-limiting.

Examples 1-7:

Mixes were prepared according to the formulations in Table 1, as follows. The ingredients were combined in an agitated heated mix tank and subjected to high shear mixing at a temperature of 65°C for 2 minutes. The resulting mix was then passed through an homogeniser at 150 bar and 70°C, pasteurised at 83°C for 20 s and then rapidly cooled to 4°C using a plate heat exchanger. The mixes were then held at +2 to +5°C in a stirred holding tank until required for freezing.

Table 1

| Example Ingredient (wt%) | 1 | 2 | 3 | 4 | 5 | 6 | 7 |
|---|---|---|---|---|---|---|---|
| Sucrose | 6.0 | 6.0 | 6.0 | 6.0 | 6.0 | 6.0 | 6.0 |
| 63 DE corn syrup* | 2.8 | 2.8 | 2.8 | 2.8 | 2.8 | 2.8 | 2.8 |

(continued)

| Example Ingredient (wt%) | 1 | 2 | 3 | 4 | 5 | 6 | 7 |
|---|---|---|---|---|---|---|---|
| Skim milk powder | 7.0 | 7.0 | 7.0 | 7.0 | 7.0 | 7.0 | 7.0 |
| Cocoa Powder | 2.8 | 2.8 | 2.8 | 2.8 | 2.8 | 2.8 | 2.8 |
| LBG | 0.15 | 0.25 | 0.35 | | | | |
| Guar | | | | 0.15 | 0.25 | 0.35 | |
| Iota-carrageenan | | | | | | | 0.35 |
| Water | To 100 | To 100 | To 100 | To 100 | To 100 | To 100 | To 100 |
| Total solids | 18.1 | 18.2 | 18.3 | 18.1 | 18.2 | 18.3 | 18.3 |
| * 78% solids | | | | | | | |

The chilled mixes were pumped from the holding tank into an ice particle maker. This is a modified commercial ice machine (Ziegra Eismachinen GmbH) with a vertically mounted screw auger encased in a bronze barrel that is cooled using Freon 4404 refrigeration. The applied cooling can be controlled as well as the speed of rotation of the auger which affects the residence time of the slurry in the barrel. The compressor speed (40 Hz) controlling the refrigeration to the exterior of the barrel (temperature -30°C) and the rotational speed of the auger (23 rpm) inside the barrel were balanced to freeze the mix into particles of typical size 10 x 10 x 10 to 20mm at a throughput of 80-100 kg/hr. The particles left the ice particle maker at a temperature of about -2°C and were introduced into a vane-style feeder (Hoyer FF4000) which mixed them into standard ice cream mixes. Subsequently these pieces were mechanically reduced to produce 4-10 mm sized particles using a size-reduction device as described in WO 2006 / 007922.

Some particles from each example were collected separately for tasting. Examples 1 and 4 (containing a conventional amount of stabiliser) were found to have an icy texture, whereas examples 2, 3, 5, 6 and 7, which contained at least 0.25% stabiliser (LBG, guar or iota carrageenan) were chewy. Examples 2 and 3, containing LBG, were judged to be the chewiest.

Examples 8-11:

Mixes were prepared according to the formulations in Table 2 and processed as described in example 1.

**Table 2**

| Example Ingredient (wt %) | 8 | 9 | 10 | 11 |
|---|---|---|---|---|
| Sucrose | 4.8 | 3.0 | 6.0 | 5.0 |
| 63 DE Corn Syrup (78% solids) | 2.25 | 1.4 | 6.0 | |
| Fructose | | | | 3.0 |
| Skim milk powder | 5.6 | 3.5 | | 3.0 |
| Coconut oil | | | | 1.25 |
| Cocoa Powder | 2.25 | 1.4 | | |
| Strawberry Juice Concentrate 65 Brix | | | 3.5 | |
| Emulsifier | | | | 0.1 |
| Flavour and colour | | | 0.4 | 0.3 |
| LBG | 0.35 | 0.35 | 0.3 | 0.3 |
| Water | To 100 | To 100 | To 100 | To 100 |
| Total solids | 14.8 | 9.3 | 13.6 | 12.5 |

Examples 8, 10 and 11 were all chewy. Example 9 which had the lowest solids content was less chewy and had some iciness.

Examples 12-14

Mixes were prepared according to the formulations in Table 3 and processed as described in example 1.
**Table 3**

| Example Ingredient (wt %) | 12 | 13 | 14 |
|---|---|---|---|
| Sucrose | 5.5 | 5.5 | 5.0 |
| 63 DE Corn Syrup (78% solids) | 2.8 | 2.8 | |
| Fructose | 1.3 | 1.3 | 3.0 |
| Skim milk powder | 7.0 | 7.0 | 3.0 |
| Butterfat | 1.55 | 1.55 | 1.25 |
| Cocoa Powder | 4.5 | 4.5 | |
| Emulsifier | | | 0.1 |
| Colour | | | 0.2 |
| LBG | 0.25 | 0.35 | 0.3 |
| Water | To 100 | To 100 | To 100 |
| Total solids | 18.2 | 18.3 | 12.5 |

Examples 12, 13 and 14 were all chewy. The frozen particles of examples 12 and 13 were mixed into a standard milk ice, and those of example 14 were mixed into a standard vanilla ice cream to produce frozen confectionery products containing inclusions. When the products were consumed, the frozen particles retained their chewy texture.
The examples show that frozen particle inclusions with low solids contents, in particular low sugar and fat contents, can be prepared in a simple, continuous process. The presence of at least 0.2% stabiliser ensures that the frozen particle inclusions have the desired chewy texture.
The various features of the embodiments of the present invention referred to in individual sections above apply, as appropriate, to other sections *mutatis mutandis.* Consequently features specified in one section may be combined with features specified in other sections as appropriate.


**Claims**

1.    A process for producing a frozen confectionery product comprising a frozen composition which contains inclusions in the form of frozen particles, the process comprising:

> (i) preparing a mix of ingredients having a total solids content of from 5 to 25% and containing from 0.2 to 2.0 wt% of one or more stabilisers;
> (ii) optionally pasteurising and / or homogenising and / or ageing the mix;
> (iii) freezing the mix to form frozen particles in a fragmented ice maker comprising a refrigerated barrel and a screw auger; and
> (iv) dosing the frozen particles into the frozen composition.

2.    A process according to claim 1 wherein the stabilisers do not form a gel prior to freezing.

3.    A process according to claim 1 or claim 2 wherein the size of the frozen particles is mechanically reduced before, during or after step (iv).

4.    A process according to any of claims 1 to 3 wherein the stabiliser comprises locust bean gum, guar gum, tara gum, iota carrageenan, low methoxy pectin, alginate and mixtures thereof.

5.    A process according to any of claims 1 to 3 wherein the stabiliser comprises locust bean gum.

**6.** A process according to any of claims 1 to 3 wherein the stabiliser consists essentially of locust bean gum.

**7.** A process according to any of claims 1 to 6 wherein the frozen particles comprise from 0.3 to 1.0 wt% of stabiliser.

**8.** A process according to any of claims 1 to 7 wherein the frozen particles have a total solids content of from 10 to 20 wt%.

**9.** A process according to any of claims 1 to 8 wherein the frozen particles in the frozen confectionery product are from 1 to 20mm in diameter.

**10.** A process according to any of claims 1 to 9 wherein the amount of frozen particles is from 2 to 30% by weight of the frozen confectionery product.

**11.** A process according to any of claims 1 to 10 wherein the frozen particles are chocolate-flavoured.

**12.** A process according to any of claims 1 to 11 wherein the frozen composition is ice cream, water ice, milk ice, sorbet, sherbet or frozen yoghurt.


**Patentansprüche**

**1.** Verfahren zum Herstellen eines gefrorenen Süßwarenproduktes, das eine gefrorene Zusammensetzung aufweist, die Einschlüsse in Form von gefrorenen Teilchen enthält,
wobei das Verfahren Folgendes aufweist:

(i) Herstellen eines Gemischs der Bestandteile, das einen gesamten Feststoffgehalt von 5 bis 25 % aufweist und 0,2 bis 2,0 Gew.-% von einem oder mehreren Stabilisatoren enthält;
(ii) gegebenenfalls Pasteurisieren und/oder Homogenisieren und/oder Altern des Gemischs;
(iii) Gefrieren des Gemischs in einer Vorrichtung zum Herstellen von Eisstücken, um gefrorene Teilchen zu erzeugen, wobei die Vorrichtung eine Kühltrommel und eine Förderschnecke aufweist; und
(iv) Dosieren der gefrorenen Teilchen in die gefrorene Zusammensetzung.

**2.** Verfahren nach Anspruch 1,
wobei die Stabilisatoren vor dem Gefrieren kein Gel bilden.

**3.** Verfahren nach Anspruch 1 oder 2,
wobei die Größe der gefrorenen Teilchen vor dem Schritt (iv), während dieses Schrittes oder danach mechanisch verringert wird.

**4.** Verfahren nach einem der Ansprüche 1 bis 3,
wobei der Stabilisator Johannisbrotkernmehl, Guargummi, Tarakernmehl, Iota-Carrageen, methoxyarmes Pektin, Alginat und Gemische davon aufweist.

**5.** Verfahren nach einem der Ansprüche 1 bis 3,
wobei der Stabilisator Johannisbrotkernmehl aufweist.

**6.** Verfahren nach einem der Ansprüche 1 bis 3,
wobei der Stabilisator im Wesentlichen aus Johannisbrotkernmehl besteht.

**7.** Verfahren nach einem der Ansprüche 1 bis 6,
wobei die gefrorenen Teilchen 0,3 bis 1,0 Gew.-% Stabilisator aufweisen.

**8.** Verfahren nach einem der Ansprüche 1 bis 7,
wobei die gefrorenen Teilchen einen gesamten Feststoffgehalt von 10 bis 20 Gew.-% aufweisen.

**9.** Verfahren nach einem der Ansprüche 1 bis 8,
wobei die gefrorenen Teilchen im gefrorenen Süßwarenprodukt einen Durchmesser von 1 bis 20 mm haben.

**10.** Verfahren nach einem der Ansprüche 1 bis 9,

wobei die Menge der gefrorenen Teilchen 2 bis 30 Gew.-% des gefrorenen Süßwarenproduktes beträgt.

**11.** Verfahren nach einem der Ansprüche 1 bis 10,
wobei die gefrorenen Teilchen einen Schokoladengeschmack erhalten.

**12.** Verfahren nach einem der Ansprüche 1 bis 11,
wobei die gefrorene Zusammensetzung Eiscreme, Wassereis, Milcheis, Sorbet, Sorbett oder gefrorener Joghurt ist.

**Revendications**

**1.** Procédé de production d'un produit de confiserie congelé comprenant une composition congelée qui contient des inclusions sous forme de particules congelées, le procédé comprenant :

(i) la préparation d'un mélange d'ingrédients ayant une teneur totale en matières sèches de 5 à 25 % et contenant de 0,2 à 2,0 % en poids d'un ou plusieurs stabilisants ;
(ii) optionnellement la pasteurisation et/ou l'homogénéisation et/ou la maturation du mélange ;
(iii) la congélation du mélange pour former des particules congelées dans une machine à glace fragmentée comprenant un tonneau réfrigéré et un convoyeur à vis sans fin ; et
(iv) le dosage des particules congelées dans la composition congelée.

**2.** Procédé selon la revendication 1, dans lequel les stabilisants ne forment pas un gel avant la congélation.

**3.** Procédé selon la revendication 1 ou la revendication 2, dans lequel la taille des particules congelées est réduite mécaniquement avant, pendant ou après l'étape (iv).

**4.** Procédé selon l'une quelconque des revendications 1 à 3, dans lequel le stabilisant comprend la gomme de caroube, la gomme de guar, la gomme de tara, l'iota-carraghénane, la pectine à faible teneur en méthoxy, l'alginate et des mélanges de ceux-ci.

**5.** Procédé selon l'une quelconque des revendications 1 à 3, dans lequel le stabilisant comprend la gomme de caroube.

**6.** Procédé selon l'une quelconque des revendications 1 à 3, dans lequel le stabilisant consiste essentiellement en la gomme de caroube.

**7.** Procédé selon l'une quelconque des revendications 1 à 6, dans lequel les particules congelées comprennent de 0,3 à 1,0 % en poids de stabilisant.

**8.** Procédé selon l'une quelconque des revendications 1 à 7, dans lequel les particules congelées ont une teneur totale en matières sèches de 10 à 20 % en poids.

**9.** Procédé selon l'une quelconque des revendications 1 à 8, dans lequel les particules congelées dans le produit de confiserie congelé ont un diamètre de 1 à 20 mm.

**10.** Procédé selon l'une quelconque des revendications 1 à 9, dans lequel la quantité de particules congelées est de 2 à 30 % en poids du produit de confiserie congelé.

**11.** Procédé selon l'une quelconque des revendications 1 à 10, dans lequel les particules congelées sont aromatisées au chocolat.

**12.** Procédé selon l'une quelconque des revendications 1 à 11, dans lequel la composition congelée est une crème glacée, une glace à l'eau, une glace au lait, un sorbet, un sorbet laitier ou un yaourt glacé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2008382 A
- GB 1369199 A
- EP 1943905 A
- US 4569209 A
- WO 2006007922 A

**Non-patent literature cited in the description**

- **R. T. MARSHALL ; H. D. GOFF ; R. W. HARTEL.** Ice Cream. Kluwer Academic/Plenum Publishers, 2003
- **MARSHALL et al.** Ice Cream. 2003, 296